# EUROPEAN PATENT APPLICATION

(11) **EP 4 609 946 A1**
(43) Date of publication of application: **03.09.2025**
(21) Application number: 24160634.2
(22) Date of filing: 29.02.2024
(51) Int. Cl.: B01F 33/841, B01F 35/71, B01F 35/88, F04B 13/00, G01F 11/02, B01F 101/30

(54) **TINTING MACHINE WITH A POSITIVE DISPLACEMENT PUMP**

(71) Applicant: Fast & Fluid Management B.V., 2171 KZ Sassenheim (NL)
(72) Inventor: Voskuil, Marcus Johannes, 2171 KZ SASSENHEIM (NL)
(74) Representative: De Vries & Metman

(57) **Abstract**

Tinting machine (1) for metering, dispensing and mixing tinting pastes to prepare a paint of a desired colour or quality. The tinting machine comprises a plurality of dispense units (8), each dispense unit comprising a container (4) for holding a tinting paste and a pump (9). The dispense units are selectively movable to a dispense position. The tinting machine further comprises an actuator (20) engaging a selected one of the dispense units when it is in the dispense position. The actuator comprises a main gripper (40) for engaging the pump for fast dispensing, and a secondary gripper (50) for engaging the pump for accurate dispensing.

## Description

The present disclosure relates to a tinting machine comprising at least one positive displacement pump for accurately metering smaller amounts of liquid to be dispensed and for faster dispensing larger amounts. Such a tinting machine is used for dispensing and mixing tinting pastes in accordance with a predefined formulation of a desired paint colour.

In order to reduce waiting times for users mixing a paint, colorants are usually dispensed at relatively high speeds (typically about 0.5 - 1 L/min) using a dispense channel with a relatively large diameter. Accurate dispensing of smaller amounts requires the use of a dispense channel having a smaller diameter in combination with a lower dispense speed (e.g., 0.15 - 0.25 L/min). Next to the influence of the dispense channel diameter for accurate dispensing, also the accuracy of the volume displacement by the piston head plays a role. Volume displacement becomes more accurate when a smaller piston head is used. A piston pump having two aligned piston heads of different diameter can be used selectively for faster or more accurate dispensing as desired. US 2009/0236367 discloses an example of such a pump. This system uses a pump with a smaller piston head nested in a larger piston head. The construction is relatively complex and expensive to make. The required biasing springs cause unwanted side effects.

EP 3 249 222 A1 discloses a colorant dispenser with a pump and a cylindrical valve core with a plurality of channels. The channels cause a high flow resistance and make it difficult for trapped air to escape from the liquid. The volume between the piston head and the dosing outlet is large, so dosing accuracy is low. The dosing process requires a large number of steps to be taken.

US 4,964,534 discloses a double piston head colorant dispenser, with a small piston head for dispensing small amounts is movable within a larger piston head for dispensing larger amounts.

It is an object of the invention to provide a robust dispenser combining high dispense speeds with high accuracy without the aforementioned drawbacks of prior art systems.

The object of the invention is achieved with a tinting for metering and dispensing and mixing tinting pastes to prepare a paint of a desired colour or quality. The tinting machine comprises a plurality of dispense units. Each dispense unit comprising a container or canister for holding a tinting paste, and a pump for withdrawing the tinting paste from the container. The dispense units are selectively movable to a dispense position. The tinting machine further comprises an actuator engaging a selected one of the dispense units when it is in the dispense position. The actuator comprises a main gripper for engaging the pump for fast dispensing, and a secondary gripper for engaging the pump for accurate dispensing. This way, a relatively simple and robust dispenser can be used, without complicating the construction of valves or other parts.

The pump can for example be a positive displacement pump, such as a piston pump, with a main displacement member and a secondary displacement member. The main gripper connects to the main displacement member when the dispense unit is in the dispense position for moving the main displacement member in a pumping direction and the secondary gripper connects to the secondary displacement member when the dispense unit is in the dispense position for moving the secondary displacement member in the pumping direction. This way, both displacement members can directly be operated using the actuator.

In a specific embodiment, the main gripper comprises a slot receiving a geometrically matching part of the main displacement member and the secondary gripper comprises a slot receiving a geometrically matching part of the secondary displacement member when the displacement pump is moved into a dispense position. This way, a dispensing unit which is moved into the dispensing position, is automatically engaged with the actuator and can be immediately deployed to dispense a metered amount of the selected colorant.

The main gripper can for example be jointly movable with the secondary gripper, while the secondary gripper is movable in the pumping direction relative to the main gripper.

For example, the main gripper has one end engaging the main displacement member and an opposite end with an annular wall receiving the secondary gripper slidingly in the pumping direction. To this end, the secondary gripper can have an outline forming a sliding fit with the inner contour of the annular wall. This way, the secondary gripper is nested within the main gripper so they can be moved jointly if a larger amount is to be dosed. It has been found that the secondary displacement member can be moved in such a way that mechanical play is minimized.

The annular wall can for example be a non-circular annular wall capped with a cover comprising a driver, such as a stepper motor, and a threaded spindle extending coaxially form the cover towards the secondary gripper, the spindle being driven by the driver to rotate about its longitudinal axis, wherein the secondary gripper has a central threaded opening receiving the threaded spindle. Rotation of the threaded spindle causes linear movement of the secondary gripper in the pumping direction, i.e. along the longitudinal axis of the threaded spindle.

In a specific embodiment, the positive displacement pump is a piston pump, and the main displacement member is a main piston head connected to a main piston rod, and the secondary displacement member is a secondary piston head with a secondary piston rod telescopically slidable within the main piston head. The secondary piston head has one end connected to a secondary piston rod which is telescopically slidable within a central opening through the main piston rod.

In a specific embodiment, the secondary piston rod has an outer end that projects relative to an outer end of the main piston rod in all positions along the metering path of the secondary piston head.

The outer ends of the main and secondary piston rods can for example both provided with a flange or projection for engaging the respective gripper. The grip can be received in a matching slit in the gripper when the dispense unit is moved into the dispensing position.

The dispense units can for example be supported on a movable platform, such as a turntable.

The positive displacement pump can for example be a piston pump, a plunger pump, or a bellows pump or the like.

The above-described aspects will hereafter be more explained with further details and benefits with reference to the drawings showing a number of embodiments by way of example.
Figure 1A: shows a dispenser in perspective view;
Figure 1B: shows the dispenser of Figure 1A without a cover lid;
Figure 2: shows a dispensing unit of the dispenser of Figure 1;
Figure 3A: shows the dispensing unit of Figure 2 in cross section with piston heads and valve in a rest position;
Figure 3B: shows the dispensing unit of Figure 3A with the valve in a suction position;
Figure 3C: shows the dispensing unit of Figure 3A with the valve in an accurate dispense position;
Figure 3D: shows the dispensing unit of Figure 3A with the valve in a fast dispense position;
Figure 4A: shows the dispensing assembly of Figure 2 in cross section with the main and secondary piston head pushed in;
Figure 4B: shows the delivery assembly of Figure 2 in cross-section, with the grippers having the piston heads positioned as shown in Figure 4A;
Figure 5A: shows the dispensing assembly of Figure 2 in cross section with the main piston head pushed in and the secondary piston head being moved upward
Figure 5B: shows the delivery assembly of Figure 2 in cross-section, with the grippers having the piston heads positioned as shown in Figure 5A;
Figure 6A: shows the dispensing assembly of Figure 2 in cross section with the main and secondary piston head jointly moved upward;
Figure 6B: shows the delivery assembly of Figure 2 in cross-section, with the grippers having the piston heads positioned as shown in Figure 6A.

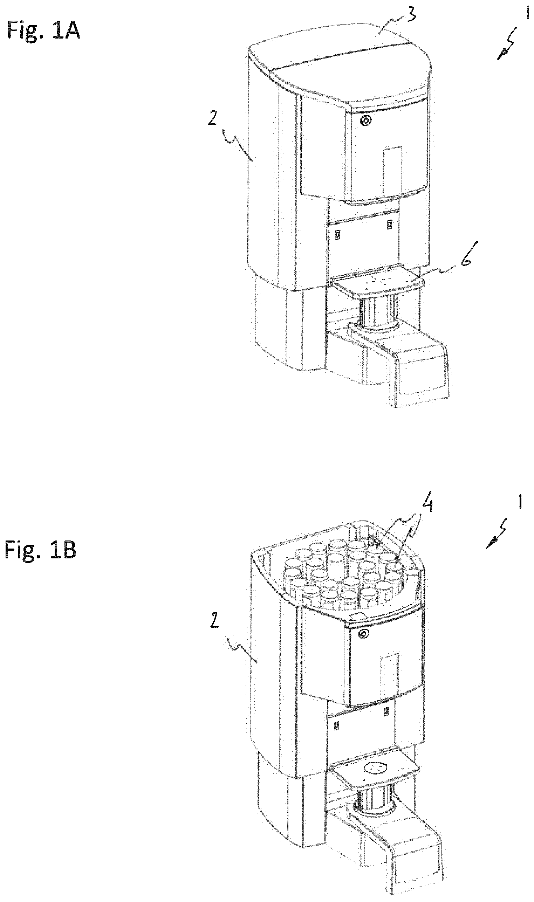

Figures 1A and 1B show a tinting machine 1 for mixing and dispensing paint products. The tinting machine 1 has a dispenser housing 2 with a cover lid 3. Figure 1B shows the tinting machine 1 without the cover lid 3, in order to show the internals of the tinting machine 1. The internals of the tinting machine 1 include containers or canisters 4 arranged in concentric circular arrays. Each container 4 holds a tinting paste or colorant of a specific colour. The containers 4 are placed in an upright position on a turntable which is rotatable about a vertical axis coaxial with the circular arrays of containers 4. The tinting machine 1 further comprises a platform 6 for positioning a paint can or similar receptacle (not shown).

The tinting machine 1 comprises a control unit (not shown) with a user interface, such as a touch screen, in communication with the control unit enabling an operator or user to input a desired paint colour. When a user inputs a desired paint colour, the control unit determines a paint formulation matching the selected paint colour, e.g., by selecting the paint formulation from a database. The determined paint formulation consists of a tinting paste or of a mixture of tinting pastes available in the respective containers 4 of the tinting machine 1, and optionally a base paint. The control unit controls rotation of the turntable to sequentially position the containers 4 containing the required tinting pastes in a dispense position above a paint can on the platform 6 and controls dispensing of the tinting pastes one by one in accordance with the selected paint formulation.

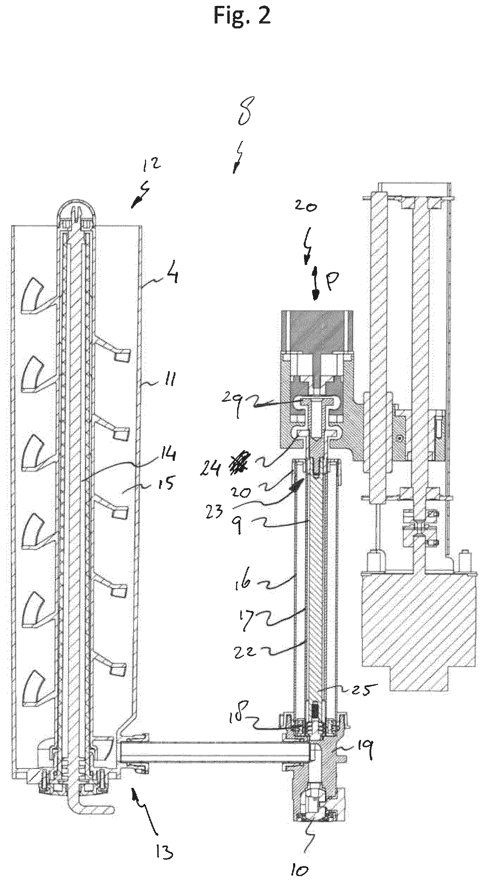

Each container 4 is part of a dispense unit 8 shown in Figure 2 in longitudinal cross section. The dispense unit 8 comprises the container 4, a piston pump 9 and a three way valve 10.

In the shown exemplary embodiment, the container 4 comprises a longitudinal cylindrical housing 11 with a top end 12 and a bottom end mounted to the turntable. The bottom end of the container 4 is provided with an outlet 13. A stirrer 14 extends coaxially within the interior space 15 of the container 4 from the bottom end of the container 4 to the top end 12.

In Figure 2, the piston pump 9 of the dispense unit 8 engages an actuator 20. The actuator 20 is not part of the dispense unit 8 but has a fixed position within the tinting machine 1 at the dispense position, where it engages the piston pump 9 of the dispense unit 8 when it is moved to the dispense position above the platform 6.

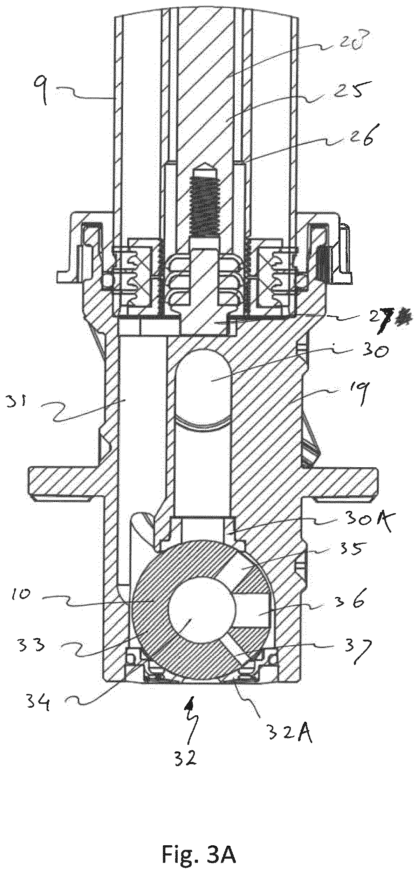

The piston pump 9 comprises a pump cylinder 16 and a main piston 17 with a main piston head 18. The pump cylinder 16 has one end connecting to a valve housing 19 of the valve 10, and an opposite end closed by a cap 21. The main piston head 18 is slidable in a pumping direction P within the pump cylinder 16 along a main stroke between a lower position at the valve housing 19 (shown in Figure 2), and a higher position at a distance from the valve housing 19. The main piston head 18 is connected to a hollow, tubular main piston rod 22 extending through an opening 23 in the cap 21 at all positions of the main piston head 18 during a complete stroke. The free end of the main piston rod 22 is provided with a flange 24, arranged and shaped to engage the actuator 20 when the turntable 5 is rotated to move the dispense unit 8 into the dispense position above the platform 6 for supporting a paint can. The opposite end of the main piston rod 22 extends coaxially through the main piston head 18, with the outer end of the main piston rod 22 being flush with the surface of the main piston head 18 (see also Figure 3A).

A secondary piston 25 is arranged within the tubular main piston rod 22, as shown in more detail in Figure 3A. The secondary piston 25 is slidable within the tubular main piston rod 22 along a precision stroke between a lower position, shown in Figure 3A, where the lower end of the secondary piston 25 is in line with the lower end of the main piston head 18, and a position within the tubular main piston rod 22 at a distance from the main piston head 18. The inner wall of the tubular main piston rod 22 is profiled to form a shoulder 26 forming a stop for the secondary piston 25 defining the end of the precision stroke.

The secondary piston 25 comprises a secondary piston head 27 connected to a secondary piston rod 28. As shown in Figure 2, the secondary piston rod 28 extends upward from the secondary piston head 27 to project from the flanged top end 24 of the main piston rod 22 at every position of the secondary piston 25 during the precision stroke. The secondary piston rod 28 has a free top end with a flange 29 (see Figure 2) shaped and arranged to engage the actuator 20 as explained hereafter.

Figures 3A-D show the lower end of the piston pump 9 connected to the valve housing 19 with the valve 10 in different positions. The valve housing 19 has a container opening 30 communicating with the container 4, a pump channel 31 communicating with the piston pump 9, and a dispense opening 32 for dispensing a tinting paste into a paint can on the platform 6. The valve housing 19 holds a valve body 33 with a central channel 34 and three radial channels: a first dispense channel 35, a second dispense channel 36 with a larger diameter than the first dispense channel 35 and a third dispense channel 37 with a smaller diameter than the first dispense channel 35. By rotating the valve body 33 within the housing 19, the radial dispense channels 35, 36, 37 can selectively be brought in line with the dispense opening 32.

The central channel 34 is always in fluid communication with the pump channel 31 in any position of the valve body 33 via the interior of the valve housing 19 around the valve body 33.

Figure 3A shows the valve body 33 in a closed position, with all radial channels 35, 35, 37 being closed of by an inner wall of the valve housing 19. A first sealing ring 30A prevents leakage to the container opening 30, and a second sealing 32A prevents leakage to the dispense opening 32.

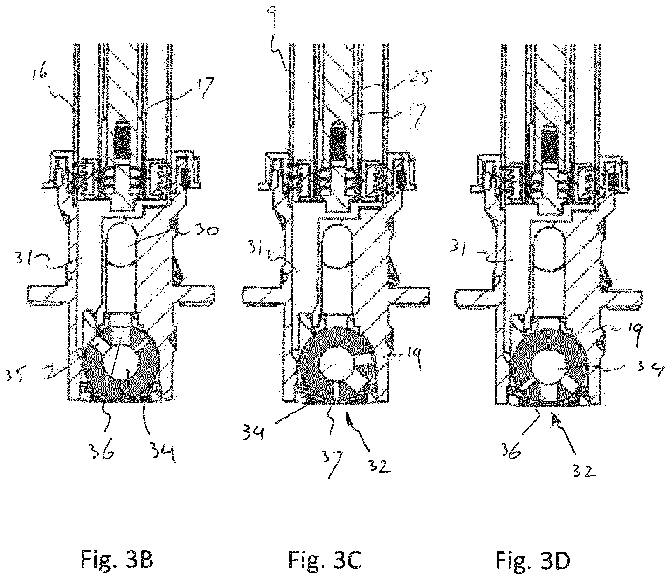

Figure 3B shows the valve body 33 in a suction position. In this position, moving the main piston 17 upward will draw liquid from the container 4 via the container opening 30, the second dispense channel 36, the central channel 34, the interior of the valve housing 19 around the valve body 33 (and partly via the first dispense channel 35), and the pump channel 31 into the pump cylinder 16.

To accurately dispense a smaller or larger amount, the valve body 33 is rotated to the position shown in Figure 3C. In this position, the small dispense channel 37 is aligned with the dispense opening 32 in the valve housing 19 and the flow path to the container opening 30 is closed off by the valve body 33 and sealing ring 30A. When the main and/or secondary piston 17, 25 is moved downward, liquid flows from the pump 9, the pump channel 31 and the interior of the valve housing 19 into the central channel 34 of the valve body 33 and finally via the small dispense channel 37 through the dispense opening 32.

For faster dispensing of a smaller or larger amount of tinting paste, the valve body 33 is rotated into the position shown in Figure 3D. In this position, the large dispense channel 36 is aligned with the dispense opening 32 in the valve housing 19. When the main and/or secondary pistons 17, 25 are moved downward, liquid flows from the pump 9, the pump channel 31, and the interior of the valve housing 19 into the central channel 34 of the valve body 33 and ultimately via the large dispense channel 36 through the dispense opening 32.

Dispensing can also be done via the first dispense channel 35 having a medium-sized diameter, e.g., if the specific rheological profile of the dispensed tinting paste would make the other dispense channels 36, 37 less useful.

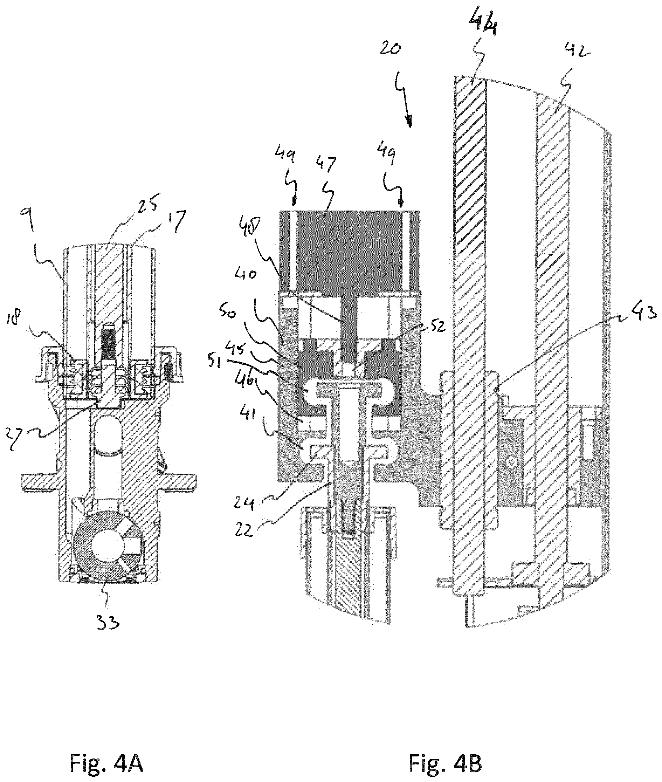

Figure 4A shows the valve 10 with the lower part of the pump 9, with the main piston 17 and secondary piston 25 pushed down. This position is the rest position of the main piston 17 when the dispense unit 8 is not in the dispense position, and is also the starting position of a suction stroke (when the valve body 33 is in the position shown in Figure 3B) and the end point of a dosing stroke (when the valve body 33 is in the position of Figure 3C or 3D).

Figure 4B is a cross section of the actuator 20 along a plane extending through the rotational axis of the turntable and centrally through the actuator 20. The actuator 20 has a main gripper 40. The main gripper 40 has a main slot 41 extending along the full width of the main gripper 40 (i.e., in a direction perpendicular to the plane of the drawing). While the actuator 20 has a fixed place at the dispense position within the tinting machine 1, the flanged top end 24 of the tubular main piston rod 22 passes freely through the main slot 41 when the turntable rotates the dispense unit 8 via the dispense position.

The main gripper 40 is connected to a threaded spindle 42 driven to rotate by a stepper motor (not shown). Rotating the spindle 42 will move the main gripper 40 up or down. The main gripper 40 is also connected to a slider 43 sliding along a guide 44 parallel to the spindle 42 when the spindle 42 rotates, to avoid rotation of the main gripper 40 with the spindle 42.

The upper end of the main gripper 40 comprises an upwardly extending annular wall 45. In top view this wall is annular but not circular. The annular wall 45 surrounds an interior space 46 with an open top end capped by a drive unit 47, in particular a secondary stepper motor, driving a secondary threaded spindle 48 extending downward into the interior space 46 surrounded by the annular wall 45. The drive unit 47 is fixed to the top end of the annular wall 45 by fasteners 49.

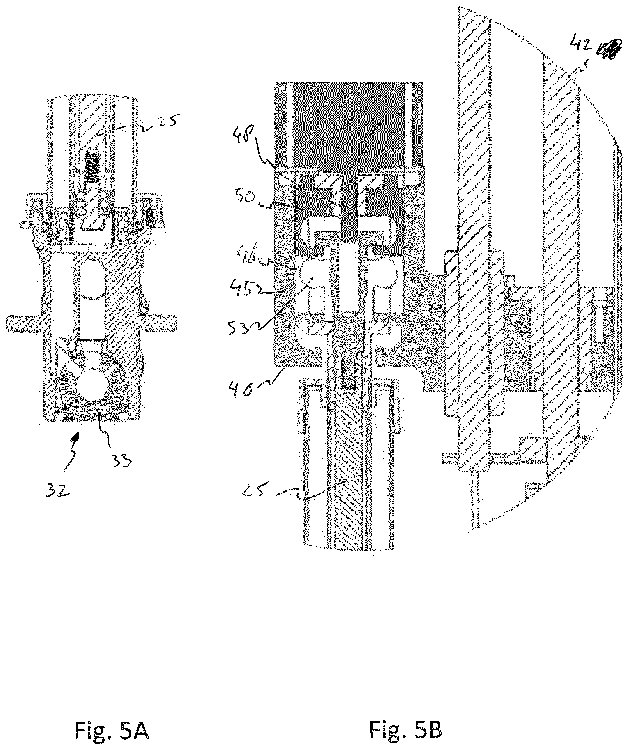

A secondary gripper 50 is accommodated for up and down movement in the interior space 46 surrounded by the annular wall 45. To this end, the secondary gripper 50 has a cross sectional outline forming a sliding fit with the inner contour of the annular wall 45. The secondary gripper 50 comprises a secondary slot 51 extending along the full width of the secondary gripper 50 and the annular wall 45 (i.e., in a direction perpendicular to the plane of the drawing), so rotating the turntable moves the flanged top end 29 of the secondary piston rod 28 freely and unhindered through the slot 51 and through an aligned slot 53 in the annular wall 45 (see, e.g., Figure 5B), while simultaneously the flanged end 24 of the main piston rod 22 passes freely through the main slot 41 of the main gripper 40 when the dispense unit 8 passes the dispense position.

The secondary gripper 50 further comprises a central threaded opening 52 receiving the secondary threaded spindle 48. When the secondary threaded spindle 48 rotates, the secondary gripper 52 is moved upward or downward relative to main gripper 40.

In Figure 4B a dispense unit 8 is placed in the dispense position with the flanged top end 24 of the main piston rod 22 received in the main slot 41 of the main gripper 40 and the flanged top end 29 of the secondary piston rod 28 is received in the secondary slot 51 of the secondary gripper 50. The secondary gripper 50 is at its lowest point within the interior space 46 enclosed by the annular wall 45. Also the main gripper 40 is at its lowest point. This corresponds to a lowest position of both the main piston head 18 as well as the secondary piston head 27, as shown in Figure 4A.

To dose a small amount of a tinting paste, the valve body 33 is moved to the suction position shown in Figure 3B and subsequently the secondary piston 25 is moved upward to make a suction stroke, while the main piston 17 remains in its lowest position. This situation is shown in Figure 5A, while Figure 5B shows the corresponding positions of the main gripper 40 and secondary gripper 50. The main gripper 40 is still in its lowest position, while the secondary gripper 50 is lifted to the highest position within the interior space 46 surrounded by the annular wall 45. In a next step, the valve body 33 is moved into the accurate dispense position shown in Figure 3C and subsequently the secondary threaded spindle 48 is driven to rotate and move the secondary gripper 50 downward and the secondary gripper 50 moves the secondary piston 25 downward to dispense the dosed amount of tinting paste via the dispense opening 32.

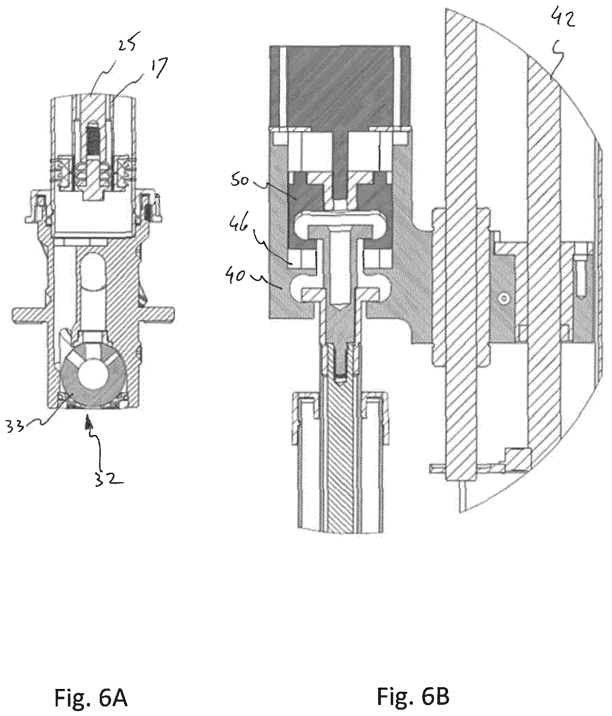

To dose a large amount of tinting paste, the valve body 33 is moved to the suction position shown in Figure 3B and subsequently the main piston 17 is moved upward to make a suction stroke, while the secondary piston 25 maintains the same position relative to the main piston 17. This situation is shown in Figure 6A, while Figure 6B shows the corresponding positions of the main and secondary grippers 40, 50. The main piston 17 is lifted by the main gripper 40 driven by the main threaded spindle 42. The secondary gripper 50 moves with the main gripper 40, while remaining in the lowest position within the interior space 46 surrounded by the annular wall 45. In a next step, the valve body 33 is moved into the fast dispense position shown in Figure 3D or in the accurate dispense position shown in Figure 3C. Subsequently the main threaded spindle 42 is driven to rotate and move the main and secondary grippers 40, 50 jointly downward to dispense the dosed amount of tinting paste via the dispense opening 32.

It is noted that the drawings are schematic, not necessarily to scale and that details that are not required for understanding the present invention may have been omitted. The terms "upward", "downward", "below", "above", and the like relate to the embodiments as oriented in the drawings, unless otherwise specified.

The disclosure is not restricted to the above described embodiments which can be varied in a number of ways within the scope of the claims. For instance, the vertical piston pump of the embodiment shown in the Figures, can be replaced with a piston pump which is horizontal or otherwise non-vertical, or can be replaced with another type of positive displacement pump, such as a plunger pump or a bellows pump.

## Claims

1. Tinting machine (1) for metering and dispensing and mixing tinting pastes to prepare a paint of a desired colour or quality;
wherein the tinting machine comprises a plurality of dispense units (8), each dispense unit comprising a container (4) for holding a tinting paste and a pump (9);
wherein the dispense units are selectively movable to a dispense position;
wherein the tinting machine further comprises an actuator (20) engaging a selected one of the dispense units when it is in the dispense position;
wherein the actuator comprises a main gripper (40) for engaging the pump for fast dispensing, and a secondary gripper (50) for engaging the pump for accurate dispensing.

2. Tinting machine according to claim 1, wherein the pump is a positive displacement pump (9), such as a piston pump, with a main displacement member (17) and a secondary displacement member (25);
wherein the main gripper (40) connects to the main displacement member (17) when the dispense unit is in the dispense position for moving the main displacement member in a pumping direction (P); and
wherein the secondary gripper (50) connects to the secondary displacement member (17) when the dispense unit is in the dispense position for moving the secondary displacement member in the pumping direction (P).

3. Tinting machine according to claim 2, wherein the main gripper (40) comprises a slot (41) receiving a geometrically matching part of the main displacement member and the secondary gripper comprises a slot (51) receiving a geometrically matching part of the secondary displacement member when the displacement pump is moved into a dispense position.

4. Tinting machine according to any one of the preceding claims, wherein the main gripper (40) is jointly movable with the secondary gripper |(50) and the secondary gripper is movable in the pumping direction (P) relative to the main gripper (40).

5. Tinting machine according to claim 4, wherein the main gripper (40) has one end engaging the main displacement member and an opposite end with a annular wall (45) receiving the secondary gripper (50) slidingly in the pumping direction (P) .

6. Tinting machine according to claim 5, the annular wall (45) being capped with a cover comprising a driver (47), such as a stepper motor, and a threaded spindle (48) extending coaxially towards the main gripper, the spindle being driven by the driver to rotate about its longitudinal axis, wherein the secondary gripper (50) has a central threaded opening (52) receiving the threaded spindle.

7. Tinting machine according to any one of the preceding claims, wherein the positive displacement pump is a piston pump, and the main displacement member is a main piston (17) with a main piston head (18) connected to a main piston rod (22), and the secondary displacement member is a secondary piston (25) with a secondary piston head and a secondary piston rod telescopically slidable within the main piston rod (22),
wherein the secondary piston head has one end connected to a secondary piston rod which is telescopically slidable within the main piston rod.

8. Tinting machine according to claim 7, wherein the secondary piston rod (28) has an outer end that projects relative to an outer end of the main piston rod (22) in all positions along the metering path of the secondary piston head.

9. Tinting machine according to claim 8, wherein the outer ends of the main and secondary piston rods (22, 28) are both provided with a flange (24, 29) or projection for engaging the respective gripper (40, 50).

10. Tinting machine according to any one of the preceding claims, wherein the dispense units (8) are supported on a platform, such as a turntable (5).

11. Tinting machine according to any one of the preceding claims, wherein the main gripper (4) is operative connected to a first drive, and the secondary gripper (50) is connected to a second drive.

12. Tinting machine according to claim 11, wherein the first drive is a first stepper motor and the second drive is a second stepper motor with a higher resolution than the first stepper motor.
